# EUROPÄISCHE PATENTSCHRIFT

(11) **EP 1 132 414 B1**
(45) Veröffentlichungstag und Bekanntmachung des Hinweises auf die Patenterteilung: **28.08.2002**
(21) Anmeldenummer: 01104344.5
(22) Anmeldetag: 23.02.2001
(51) Int. Cl.: C08G 18/62, C08G 18/67, C09D 175/16

(54) **Verfahren zur Herstellung von strahlenhärtbaren Bindemitteln und die damit hergestellten Beschichtungen**
Process of preparation of radiation curable binders and coatings prepared therewith
Procédé de préparation de liants durcissables par radiation et rêvetements les contenant

(30) Priorität: 07.03.2000 DE 10010994
(43) Veröffentlichungstag der Anmeldung: 12.09.2001
(73) Patentinhaber: Goldschmidt AG, 45127 Essen (DE)
(72) Erfinder: Reusmann, Gerhard, Dr., 45131 Essen (DE)

(56) Entgegenhaltungen:
- EP-A- 0 386 507
- EP-A- 0 622 378
- WO-A-97/29142

## Beschreibung

Die vorliegende Erfindung beschreibt die Herstellung von Urethanacrylatverbindungen auf der Basis von α,ω-Polymethacrylatdiolen und deren Verwendung als Bindemittel für strahlenhärtbare Beschichtungen.

Bei der Strahlenhärtung werden Bindemittel verwendet, die unter Einfluss von UV-Licht oder Elektronen rasch aushärten bzw. polymerisieren. Ein üblicher strahlenhärtender Lack besteht prinzipiell aus einem reaktiven Harz, einem oder mehreren Monomeren sowie gegebenenfalls Füllstoffen, Mattierungsmitteln und/oder Pigmenten und bei Bedarf einem oder mehreren Additiven. Zur Einleitung der Polymerisation bei der UV-Technologie verwendet man meist Photoinitiatoren oder auch Photosensibilisatoren.

Die Bindemittelauswahl hängt von verschiedenen Faktoren ab, vor allem vom Substrat, von den geforderten Filmeigenschaften, zum Beispiel Härte, Kratzfestigkeit, Flexibilität, Haftung und der Auftragsart. Eine Übersicht zu üblichen Bindemittelsystemen für strahlenhärtende Lacke gibt zum Beispiel N.S. Allen et.al. in UV and EB Curable Polymers, Kapitel II, Vol. 2, "Chemistry & Technology of UV & EB Formulation for Coatings, Inks and Paint", Verlag SITA Technology 1991.

Beispiele für Harze, die als ungesättigte Verbindungen mit reaktionsfähigen Gruppen über freie Radikale in Vernetzungsreaktionen zur Filmbildung führen, sind unter anderem acrylierte Polyester, Urethane, Polyacrylate, Epoxyharze, Oligoetheracrylate sowie ungesättigte Polyester/Styrol-Bindemittel.

Urethanacrylate werden wegen ihrer hohen Abriebfestigkeit und Flexibilität speziell für die Überlackierung von PVC- und Korkfußböden verwendet. Weitere Anwendungsbeispiele sind Holzbeschichtungen, Überdrucklacke, Druckfarben und Lederbeschichtungen. Ferner setzt man Urethanacrylate in Lacksystemen für flexible Kunststoffsubstrate ein. In der Elektroindustrie werden Urethanacrylate in Siebdruckfarben und Löt-Resists für Leiterplatten verwendet. Zudem weisen Urethanacrylate meist Draize-Werte unter 1 auf (siehe auch P.G. Garrat in "Die Technologie des Beschichtens - Strahlenhärtung", Vincentz Verlag Hannover, 1996).

Es gibt mehrere Vertreter der Urethanacrylatverbindungen, die aus einer Vielzahl von Ausgangsmaterialien hergestellt werden können. Acrylierte Urethane entstehen prinzipiell durch Umsetzung einer Isocyanatgruppe mit einem hydroxygruppenhaltigen Acrylat- oder Methacrylatmonomer. Kommen Diisocyanate zur Anwendung, werden die entsprechenden Divinyladdukte erhalten. Einen Überblick über den Aufbau strahlenhärtender Lacke und Formulierungen gibt P.G. Garrat (loc. cit.). Die einfachsten Urethanacrylate ergeben sich durch Umsetzung eines Diisocyanates mit einem hydroxygruppenhaltigen Monomer. Wenn weitere hydroxylgruppenhaltige Verbindungen, zum Beispiel Polyole, Polyester oder Polyether mit mehr als einer Hydroxygruppe eingesetzt werden, findet eine Kettenverlängerung statt. Kommerziell erhältliche Diisocyanate, die acryliert werden können, sind unter anderem Toluylendiisocyanat (TDI), Hexamethylendiisocyanat (HMDI), Isophorondiisocyanat (IPDI) und Tetramethylxyloldiisocyanat (TMXDI). Ferner stehen Oligomere einiger dieser Produkte, zum Beispiel aus HMDI, zur Verfügung. Die in der Praxis angewendeten acrylischen Monomere mit Hydroxyl-Funktionalität sind vor allem Hydroxyethylacrylat (HEA) und Hydroxypropylacrylat (HPA).

Eine Vielzahl von Urethanacrylaten kann durch Anwendung von Ausgangsprodukten mit mehreren Hydroxylgruppen hergestellt werden. Flexible Urethanacrylate ergeben sich zum Beispiel durch Reaktion eines Diisocyanates mit einem langkettigen Glycol und hydroxylgruppenhaltigem Monomer. Ein mehr oder weniger hartes Urethanacrylat entsteht durch Umsetzung eines mehr oder weniger stark verzweigten multifunktionellen Polyols mit einem Diisocyanat und hydroxylgruppenhaltigem Monomer.

Es sind prinzipiell zwei Herstellungswege möglich. Zum einem kann ein hydroxylgruppenhaltiges Präkondensat oder Polymerisat mit einem Diisocyanat-Überschuß umgesetzt werden. Das ungesättigte Urethanacrylat bildet sich durch Hydroxyalkylacrylat-Addition. Alternativ lässt man zuerst das Diisocyanat und Hydroxyalkylacrylat reagieren und setzt anschließend das Halbaddukt mit einem hydroxylgruppenhaltigen Polykondensat oder Polymerisat um.

Es gibt bekanntermaßen drei Hauptklassen von Urethanacrylaten, die Polyesterurethanacrylate (hergestellt aus Polyesterpolyolen), die Polyetherurethanacrylate (hergestellt aus Polyetherpolyolen) und Polyolurethanacrylate.

Kommerziell erhältlich sind Urethanacrylat-Verbindungen mit sehr unterschiedlichen Eigenschaften. Beschichtungen auf Basis Urethanacrylat zeichnen sich vor allem durch gute Zähigkeit, Chemikalienbeständigkeit und Haftung aus. Modifizierungen am Polymergerüst, zum Beispiel bei Kettenlänge, Konzentration reaktiver Gruppen und anderen funktionellen Parametern, beeinflussen das Eigenschaftsbild der Produkte in verschiedener Hinsicht. Lichtstabile Urethanacrylate entstehen durch die Anwendung der aliphatischen Diisocyanate wie IPDI oder HMDI. Die Verwendung von preiswerten aromatischen Diisocyanaten kann zu Lichtstabilitäts- und Verfärbungsproblemen führen.

Die vorliegende Erfindung beschreibt die Herstellung von Urethanacrylaten auf der Basis von α,ω-Polymethacrylatdiolen und deren Verwendung als Bindemittel für strahlenhärtbare Beschichtungen.

α,ω-Polymethacrylatdiole können nach EP-A-0 386 507 durch selektive Umesterung von ω-hydroxyfunktionellen Polymethacrylaten mit Kurzkettendiolen hergestellt werden. Eine Übersicht über die Herstellung gibt A. Knebelkamp und G. Reusmann "α,ω-Polymethacrylatdiole in PUR-Bindemitteln" in Farbe & Lack 105, 1999, S. 24. α,ω-Polymethacrylatdiole sind kommerziell über die Tego Chemie Service GmbH (DE) unter den Handelsnamen TEGO® Diol BD 1000 (α,ω-Polybutylmethacrylatdiol mit einer Molekularmasse von 1000 g/mol) oder TEGO® Diol MD 1000 (α,ω-Polymethylmethacrylatdiol mit einer Molekularmasse von 1000 g/mol) erhältlich.

Überraschenderweise wurde nun gefunden, dass durch Verwendung dieser Klasse von Makrodiolen, den α,ω-Polymethacrylatdiolen, neuartige Eigenschaften bei den daraus formulierten strahlenhärtbaren Beschichtungen gefunden werden.

Die vorliegende Erfindung betrifft in einer ersten Ausführungsform Urethanacrylate erhältlich durch Umsetzung von
a) α,ω-Polymethacrylatdiolen, deren Mischungen oder Mischungen aus Polyolen mit α,ω-Polymethacrylatdiolen mit
b) einem oder mehreren Polyisocyanaten mit jeweils wenigstens zwei Isocyanatgruppen und
c) einem oder mehreren Hydroxyalkylacrylaten oder Hydroxyalkylmethacrylaten in Gegenwart von
d) Inhibitoren sowie gegebenenfalls
e) Isocyanatgruppen-reaktiven Verbindungen.

Überraschenderweise wurde gefunden, dass durch Einsatz von auf α,ω-Polymethacrylatdiolen basierenden Urethanacrylaten besondere Beschichtungseigenschaften erzielt werden können. Insbesondere erlaubt die Verwendung der erfindungsgemäßen Urethanacrylat-Bindemittel die Formulierung besonders harter und flexibler Beschichtungen. Entsprechend weisen derartige Beschichtungen besondere Kratzfestigkeiten im Vergleich zu üblichen, auf Polyesterpolyolen oder Polyetherpolyolen basierenden, Beschichtungen des Standes der Technik auf. Ebenso wird die Bewitterungsstabilität entscheidend verbessert.

Die eingesetzten α,ω-Polymethacrylatdiole sind nach EP-A-0 386 507 durch selektive Umesterung von ω-hydroxyfunktionellen Polymethacrylaten mit Kurzkettendiolen herstellbar. Durch Variation der Einsatzmenge des hydroxylgruppenhaltigen Kettenüberträgers, beispielsweise Mercaptoethanol, kann die Molekularmasse gesteuert werden (zum Beispiel 1000 g/mol, 2000 g/mol), durch Variation des Methacrylatmonomers, beispielsweise Methylmethacrylat oder Butylmethacrylat, kann die Glastemperatur (Tg) gesteuert werden (zum Beispiel Tg = 20°C, Tg = -30°C). Besonders geeignete α,ω-Polymethacrylatdiole sind beispielsweise TEGO® Diol BD 1000 (α,ω-Polybutylmethacrylatdiol mit einer Molekularmasse von 1000 g/mol) und TEGO® Diol MD 1000 (α,ω-Polymethylmethacrylatdiol mit einer Molekularmasse von 1000 g/mol).

Selbstverständlich können auch Mischungen von verschiedenen α,ω-Polymethacrylatdiolen oder Mischungen aus α,ω-Polymethacrylatdiolen mit anderen Polyolen, beispielsweise Polyesterpolyolen, Polycarbonatdiolen oder Polyetherpolyolen, eingesetzt werden. Zur Herstellung von wasserverdünnbaren Urethanacrylaten können Mischungen mit emulgierend wirkenden Polyolen, beispielsweise Dimethylolpropionsäure, verwendet werden.

Geeignete Polyisocyanate besitzen wenigstens zwei Isocyanatfunktionen pro Molekül. Beispiele für Polyisocyanate sind insbesondere Diisocyanate und Triisocyanate. Geeignete Diisocyanate umfassen beispielsweise Toluylendiisocyanat (TDI), Hexamethylendiisocyanat (HMDI), Isophorondiisocyanat (IPDI), Diphenylmethandiisocyanat (MDI) und Tetramethylxyloldiisocyanat (TMXDI). Ferner stehen Oligomere einiger dieser Produkte, zum Beispiel aus HMDI (Trimer), zur Verfügung.

Durch Einsatz aliphatischer Diisocyanate wie IPDI oder HMDI entstehen besonders lichtstabile und verfärbungsresistente Urethanacrylate.

Geeignete acrylische Monomere mit Hydroxyl-Funktionalität sind vor allem Hydroxyalkylacrylate wie beispielsweise Hydroxyethylacrylat (HEA) und Hydroxypropylacrylat (HPA). Ebenfalls können die entsprechenden weniger toxischen Hydroxyalkylmethacrylate eingesetzt werden.

Ein wesentlicher Bestandteil der Reaktionsansätze zur Herstellung der erfindungsgemäßen Urethanacrylate ist die Anwesenheit von Inhibitoren. Inhibitoren im Sinne der vorliegenden Erfindung umfassen insbesondere Stabilisatoren für (Meth)acrylsäure oder (Meth)acrylsäureester. Geeignete Stabilisatoren sind beispielsweise Hydrochinonmonomethylether, wahlweise auch Hydrochinon oder Phenothiazin, die in Mengen eingesetzt werden können, die für die Stabilisierung von (Meth)acrylsäure oder (Meth)acrylsäureestern üblich sind. Die Aufgabe dieser Inhibitoren besteht in der Verhinderung der Homopolymerisation der Hydroxyalkylacrylate oder auch der Isocyanat-funktionellen Acrylate oder Methacrylate, die als Komponente b beziehungsweise b' einen wesentlichen Bestandteil der erfindungsgemäßen Urethanacrylate darstellen.

Das Stoffmengenverhältnis von α,ω-Polymethacrylatdiol zu Diisocyanat zu Hydroxyalkylacrylat kann in weiten Bereichen variiert werden. Besonders gebrauchstaugliche Urethanacrylate erhält man jedoch bei Einsatz eines in etwa stöchiometrischen Verhältnisses der Komponenten zueinander. So ist es im Sinne der vorliegenden Erfindung besonders bevorzugt, das Stoffmengenverhältnis von α,ω-Polymethacrylatdiol zu Diisocyanat zu Hydroxyalkylacrylat im Bereich von 1 : 2 : 2 einzustellen.

Für den Fall, dass als Polyisocyanat ein Triisocyanat eingesetzt wird, ist es im gleichen Sinne besonders bevorzugt, das Stoffmengenverhältnis von α,ω-Polymethacrylatdiol zu Triisocyanat zu Hydroxyalkylacrylat im Verhältnis von 1 : 2 : 4 einzustellen.

Auch im Falle der Umsetzung von α,ω-Polymethacrylatdiolen mit einem Isocyanat-funktionellen Acrylat oder Methacrylat ist es möglich, das Stoffmengenverhältnis dieser beiden Komponenten in breiten Bereichen zu variieren. Besonders bevorzugt im Sinne der vorliegenden Erfindung ist ein stöchiometrisches Verhältnis der Komponenten zueinander. Somit wird erfindungsgemäß bevorzugterweise das Stoffmengenverhältnis von α,ω-Methacrylatdiol zu Isocyanat-funktionellem (Meth)acrylat im Verhältnis von 1 : 1 eingestellt.

Allgemein gilt für die erfindungsgemäßen Urethanacrylate, dass die in Kombination mit den α,ω-Polymethacrylatdiolen eingesetzten Polyole auch in einer großen Auswahl variiert werden können. Somit kommen als Polyole im Sinne der vorliegenden Erfindung insbesondere Polyesterpolyole, Polyetherpolyole, Polycarbonatdiole oder monomere Polyole in Frage.

Urethanhexaacrylate im Sinne der vorliegenden Erfindung können durch Umsetzung mit hydroxyfunktionellen Triacrylaten, beispielsweise Pentaerithroltriacrylat (PETA), erhalten werden. Entsprechende Bindemittel weisen in Beschichtungen besonders hohe Vernetzungsdichten auf.

Die Darstellung erfolgt nach dem Reaktionsschema:

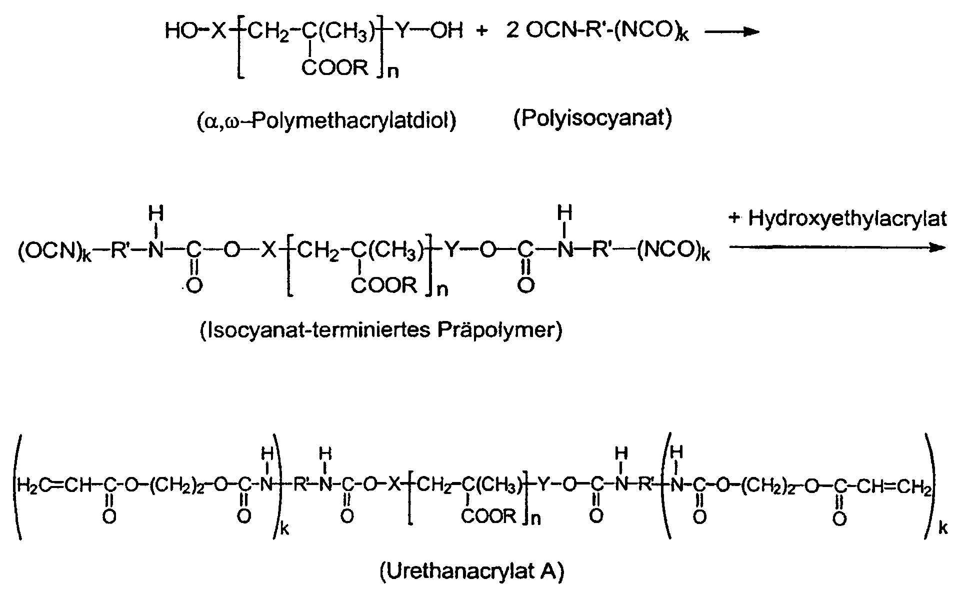

Vorzugsweise ist n = 2 bis 1000 und k = 1 bis 5, R gleich Alkyl mit 1 bis 20 Kohlenstoffatomen und R' gleich eine Alkylgruppe bestehend aus 1 bis 20 Kohlenstoffatomen, eine aromatische Gruppierung mit 6 bis 20 Kohlenstoffatomen, ein Additions- oder Kondensationsprodukt von Isocyanaten (beispielsweise Uretdion, Isocyanurat, Iminooxadiazindion, Biuret) oder auch von Isocyanaten mit Alkoholen (beispielsweise Urethan oder Allophanat). Eine Übersicht über verschiedene Isocyanate und deren HerStellung gibt M. Bock in "Polyurethane für Lacke und Beschichtungen (Vincentz-Verlag Hannover, 1999). X und Y steht dabei für bevorzugte Reste, deren Bedeutung bei A. Knebelkamp und G. Reusmann (loc. cit.) definiert ist.

Bei entsprechender Umsetzung im zweiten Reaktionsschritt mit Diacrylaten, zum Beispiel Trimethylolpropandiacrylat, entsteht ein Urethan-Tetraacrylat. Urethanhexaacrylate können durch Umsetzung zum Beispiel mit Pentaerithroltriacrylat synthetisiert werden.

Im Sinne der vorliegenden Erfindung ist daher das Verfahren zur Herstellung von Urethanacrylaten der vorliegenden Erfindung dadurch gekennzeichnet, dass man
a) α,ω-Polymethacrylatdiole, deren Mischungen oder Mischungen aus Polyolen mit α,ω-Polymethacrylatdiolen mit
b) einem oder mehreren Polyisocyanaten mit jeweils wenigstens zwei Isocyanatgruppen und
c) einem oder mehreren Hydroxyalkylacrylaten oder Hydroxyalkylmethacrylaten in Gegenwart von
d) Inhibitoren und gegebenenfalls
e) Isocyanatgruppen-reaktiven Verbindungen
umsetzt.

Ein alternativer Reaktionsweg ist die Umsetzung von einem α,ω-Polymethacrylatdiol mit 2 Äquivalenten eines Isocyanat-funktionellen Acrylates oder Methacrylates, beispielsweise Isocyanatoethylmethacrylat (mit R'' = Alkyl mit 1 bis 8 Kohlenstoffatomen).

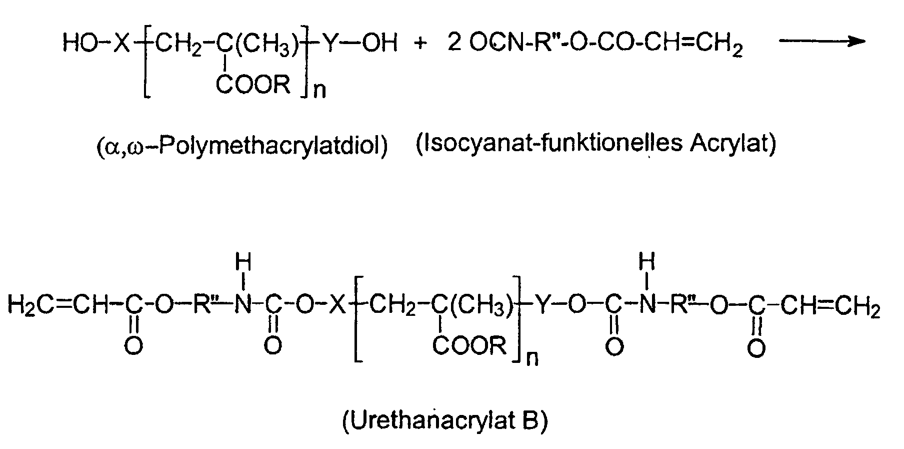

Somit besteht eine weitere Ausführungsform der vorliegenden Erfindung in einem Verfahren zur Herstellung von Urethanacrylaten, das dadurch gekennzeichnet ist, dass man
a) α,ω-Polymethacrylatdiole, deren Mischungen oder Mischungen aus Polyolen mit α,ω-Polymethacrylatdiolen mit
b')einem oder mehreren Isocyanat-funktionellen Acrylaten oder Methacrylaten in Gegenwart von
d) Inhibitoren und gegebenenfalls
e) Isocyanatgruppen-reaktiven Verbindungen
umsetzt.

Besonders bevorzugt im Sinne der vorliegenden Erfindung ist es, das oben definierte Urethanacrylat anschließend mit einem oder mehreren handelsüblichen Emulgatoren in Wasser zu emulgieren. Die Menge des Emulgators richtet sich dabei nach dem gewünschten Anwendungszweck und kann vom Fachmann ohne weiteres durch einfache Versuche ermittelt werden.

Eine weitere Ausführungsform der vorliegenden Erfindung besteht insbesondere in der Verwendung der oben definierten Urethanacrylate zur Beschichtung von Substraten. Hierbei kann es von besonderem Vorteil sein, wenigstens einen Zusatzstoff aus der Gruppe der Monomere, ausgewählt aus mono- und multifunktionellen Acrylaten, Photoinitiatoren oder -sensibilisatoren, Oligomeren, Füllstoffen, Mattierungsmitteln, Verdickungsmitteln, Reaktivverdünnern, Pigmenten, Lösemitteln, Lichtschutzmitteln oder Additiven einzusetzen.

Zur Prüfung der anwendungstechnischen Eigenschaften wurden die erhaltenen Bindemittel zu Lacken formuliert und getestet. Die Bindemittel werden nach den folgenden Herstellvorschriften synthetisiert.

Isocyanatgruppen-reaktive Verbindungen werden im Sinne der vorliegenden Erfindung dann eingesetzt, wenn das erhaltene Urethanacrylat noch freie Isocyanatgruppen enthält. An dieser Stelle ist insbesondere Methanol zu erwähnen.

Generell können auch Kombinationen von verschiedenen Urethanacrylatharzen oder Kombinationen mit anderen strahlenhärtbaren Bindemitteln, beispielsweise Polyesteracrylate oder Epoxyacrylate, eingesetzt werden.

Zur Formulierung wässriger strahlenhärtbarer Lacke wird das erfindungsgemäße Urethanbindemittel in Wasser mit einem oder mehreren handelsüblichen Emulgatoren, beispielsweise bei einem Festkörper von 50%; emulgiert.

### Ausführungsbeispiele:

### Bindemittel: Urethanacrylat Oligomer I:

444 g Isophorondiisocyanat (2 mol) wurden unter Stickstoffatmosphäre auf 50°C erwärmt. Daraufhin wurden 232 g 2-Hydroxyethylacrylat (2 mol) und 70 ppm Phenothiazin (bezogen auf Gesamtgewicht Urethanacrylat-Bindemittel) bei 60°C über einen Zeitraum von 2 Stunden zugetropft. Nach Ende der Reaktion wurde 3 Stunden bei 60°C gerührt und auf 50°C abgekühlt. Über einen Zeitraum von einer Stunde wurden 100 g des α,ω-Polybutylmethacrylat-diols TEGO® Diol BD 1000 (1 mol) bei 60°C zugetropft. Es wurde 3 Stunden bei 70°C gerührt, daraufhin auf 60°C abgekühlt und zur Abreaktion verbleibender Isocyanatgruppen 0,5% Methanol (bezogen auf das Gesamtgewicht Urethanacrylat-Bindemittel) zugegeben. Das resultierende Produkt hatte eine theoretische Molekularmasse von 1628 g/mol und konnte bei Bedarf mit reaktiven Monomeren zur Erreichung einer niedrigeren Viskosität verdünnt werden.

### Vergleichsbeispiel 1:

### Bindemittel: Urethanacrylat Oligomer II (nichterfindungsgemäße Referenz):

444 g Isophorondiisocyanat (2 mol) wurden unter Stickstoffatmosphäre auf 50°C erwärmt. Daraufhin wurden 232 g 2-Hydroxyethylacrylat (2 mol) und 70 ppm Phenothiazin (bezogen auf Gesamtgewicht Urethanacrylat-Bindemittel) bei 60°C über einen Zeitraum von 2 Stunden zugetropft. Nach Ende der Reaktion wurde 3 Stunden bei 60°C gerührt und auf 50°C abgekühlt. Über einen Zeitraum von einer Stunde wurden 105 g des Polyoxypropylenglycols der Firma ARCOL Chemical ARCOL 1010 (1 mol) bei 60°C zugetropft. Es wurde 3 Stunden bei 70°C gerührt, daraufhin auf 60°C abgekühlt und zur Abreaktion verbleibender Isocyanatgruppen 0,5% Methanol (bezogen auf Gesamtgewicht Urethanacrylat-Bindemittel) zugegeben. Das resultierende Produkt hatte eine theoretische Molekularmasse von 1678 g/mol und konnte bei Bedarf mit reaktiven Monomeren zur Erreichung einer niedrigeren Viskosität verdünnt werden.

### Vergleichsbeispiel 2:

### Bindemittel: Urethanacrylat Oligomer III (nichterfindungsgemäße Referenz):

Herstellung des Polyesters P1: 7,9 g 1,3-Butylenglycol (1,0 mol), 41,1 g 1,6-Hexandiol (4,0 mol), 50,9 g Adipinsäure (4,0 mol) und 0,1 g Dibutylzinnoxid als Katalysator wurden solange unter Wasserabspaltung miteinander umgesetzt, bis die Säurezahl unterhalb von 3,0 mg KOH/g Polymer war. Überschüssiges Wasser wurde durch Vakuumdestillation abgetrennt. Der erhaltende Polyester entsprach einer theoretischen Molekularmasse von 1004 g/mol.

### Beispiel 2:

Herstellung des Urethanacrylates: 444 g Isophorondiisocyanat (2 mol) wurden unter Stickstoffatmosphäre auf 50°C erwärmt. Daraufhin wurden 232 g 2-Hydroxyethylacrylat (2 mol) und 70 ppm Phenothiazin (bezogen auf Gesamtgewicht Urethanacrylat-Bindemittel) bei 60°C über einen Zeitraum von 2 Stunden zugetropft. Nach Ende der Reaktion wurde 3 Stunden bei 60°C gerührt und auf 50°C abgekühlt. Über einen Zeitraum von einer Stunde wurden 100 g Polyesterharz P1 (1 mol) bei 60°C zugetropft. Es wurde 3 Stunden bei 70°C gerührt, daraufhin auf 60°C abgekühlt und zur Abreaktion verbleibender Isocyanatgruppen 0,5% Methanol (bezogen auf Gesamtgewicht Urethanacrylat-Bindemittel) zugegeben. Das resultierende Produkt hatte eine theoretische Molekularmasse von 1632 g/mol und konnte bei Bedarf mit reaktiven Monomeren zur Erreichung einer niedrigeren Viskosität verdünnt werden.

### Formulierungen der Beschichtungen I bis III

Die Zusammensetzung der geprüften Formulierungen ergibt sich aus Tabelle 1. Einen Überblick über Formulierungen verschiedener strahlenhärtbarer Beschichtungen gibt Skeist Incorporated in "Radiation Curing, IV - A multiple-client study" (Whippany, New Jersey 07981, 1996).

**Tabelle 1:**

| Formulierungen der Beschichtungen (Angaben in Gramm) | | | |
|---|---|---|---|
| | Formulierung I | Formulierung II | Formulierung III |
| Urethanacrylat Oligomer I | 50 | - | - |
| Urethanacrylat Oligomer II (Referenz) | - | 50 | - |
| Urethanacrylat Oligomer III (Referenz) | - | - | 50 |
| Multifunktionelle Acrylate* | 42 | 42 | 42 |
| Isodecylacrylat | 3 | 3 | 3 |
| Photoinitiator Benzophenon | 3 | 3 | 3 |
| Antirubbing Additiv** | 1 | 1 | 1 |
| Verlaufsadditiv*** | 0,2 | 0,2 | 0,2 |

| | | | |
|---|---|---|---|
| [* Mischung aus Trimethylolpropantriacrylat (TMPTA), Tripropylenglycoldiacrylat (TRPGDA), 1,6-Hexandioldiacrylat (HDODA) im Gewichtsverhältnis 1:1:1 ] | | | |
| [** TEGO® Glide 100, TEGO® Glide 410, TEGO® Rad 2200 ] jeweils in gleicher Weise einsetzbar | | | |
| [*** TEGO® Rad 2100 ] | | | |

Die Verarbeitungsviskosität konnte durch Zusatz monofunktioneller Acrylate, beispielsweise Phenoxyethylacrylat, auf gewünschte Werte eingestellt werden.

Die Beschichtung wurde mit einem Spiralrakel mit einer Schichtstärke von 15-20 µm aufgetragen und gehärtet (Gerät der Firma Beltron, ein Quecksilbermitteldruckstrahler mit 120 W/cm, 2 Durchgänge bei 10 m/min Fördergeschwindigkeit). Die erhaltenen Beschichtungen wurden nach den folgenden Testmethoden geprüft.

### Testmethoden:

### Haftung:

Die Haftungs-Prüfung erfolgte durch Gitterschnitttest nach DIN ISO 2409.

### Glanz:

Die Glanzmessung erfolgte nach DIN 67 530.

### Härte:

Die Bestimmung der Bleistifthärte erfolgte nach ECCA-Norm Nr. 14.

### Flexibilität:

Die Flexibilität wurde mit Hilfe der Erichsen Tiefung nach DIN ISO 1520 an Lackfilmen auf Stahlblechen bestimmt.

### Bewitterung und Quellneigung:

Der QUV-Test wurde mit einem Gerät der Firma QUV-Company durchgeführt. Der Test erfolgte über einen Zeitraum von 1500 Stunden bei einem Wechselzyklus von 4 Stunden Bestrahlung und 4 Stunden Kondensation von Wasser. Die Schwarztafeltemperatur betrug 50°C. Die Gilbung wurde durch Bestimmung des Δ b-Wertes vor und nach QUV-Belastung nach dem Hunter-L a b-System bestimmt.

### Lagerstabilität:

Bei der Bestimmung der Lagerstabilität nach 4 Wochen bei 40°C wurden Viskositätsstabilität, Trübungen, Separationserscheinungen und die Verarbeitbarkeit beurteilt.

Die Eigenschaften der geprüften Beschichtungen ergeben sich aus Tabelle 2:

**Tabelle 2:**

| Eigenschaften der getesteten Beschichtungen | | | |
|---|---|---|---|
| | Formulierung I | Formulierung II | Formulierung III |
| Schichtstärke (µm) | 15 | 15 | 15 |
| Glanz (60°) | 88 | 89 | 86 |
| Härte | 7 H | 2 H | 4-5 H |
| Flexibilität (mm) | 1 | 1 bis 2 | 1 |
| Haftung (Gitterschnitt) | Gt0 | Gt0 | Gt0 |
| Bewitterung (Δ b vor/nach Bewitter.) | 1,0 | 5,8 | 2,8 |
| Quellneigung (nach Bewitterung) | Keine Quellung | Wenig Quellung | Starke Quellung |
| Lagerstabilität Flüssiglack | In Ordnung | In Ordnung | In Ordnung |

Aus den Testergebnissen geht eindeutig die Überlegenheit der erfindungsgemäßen Beschichtungen hervor.

Besonders die Kombination aus Flexibilität und Härte stellt eine einmalige Eigenschaftskombination dar. So zeigen die erfindungsgemäßen Beschichtungen hervorragende Kratzbeständigkeiten und Abnutzungsbeständigkeiten.

Ebenfalls wird durch die erfindungsgemäße Verwendung der α,ω-Polymethacrylatdiole die Bewitterungsbeständigkeit entscheidend verbessert, da im Vergleich zu Polyetherpolyolbasierenden Urethanacrylaten eine deutlich verbesserte UV-Beständigkeit und im Vergleich zu Polyesterpolyol-basierenden Urethanacrylaten eine deutlich verbesserte Hydrolysebeständigkeit und Anquellbeständigkeit erzielt wird.

## Patentansprüche

1. Urethanacrylate, erhältlich durch Umsetzung von
a) α,ω-Polymethacrylatdiolen, deren Mischungen oder Mischungen aus Polyolen mit α,ω-Polymethacrylatdiolen mit
b) einem oder mehreren Polyisocyanaten mit jeweils wenigstens zwei Isocyanatgruppen
c) einem oder mehreren Hydroxyalkylacrylaten oder Hydroxyalkylmethacrylaten in Gegenwart von
d) Inhibitoren und gegebenenfalls
e) Isocyanatgruppen-reaktiven Verbindungen.

2. Urethanacrylat nach Anspruch 1, **dadurch gekennzeichnet, dass** das Polyisocyanat ein Diisocyanat ist.

3. Urethanacrylat nach Anspruch 2, **dadurch gekennzeichnet, dass** das Stoffmengen-Verhältnis von α,ω-Polymethacrylatdiol zu Diisocyanat zu Hydroxyalkylacrylat 1 : 2 : 2 beträgt.

4. Urethanacrylat nach Anspruch 1, **dadurch gekennzeichnet, dass** das Polyisocyanat ein Triisocyanat ist.

5. Urethanacrylat nach Anspruch 4, **dadurch gekennzeichnet, dass** das Stoffmengen-Verhältnis von α,ω-Polymethacrylatdiol zu Triisocyanat zu Hydroxyalkylacrylat 1 : 2 : 4 beträgt.

6. Urethanacrylat nach einem der Ansprüche 1 bis 5, **dadurch gekennzeichnet, dass** das Hydroxyalkylacrylat ein hydroxyfunktionelles Triacrylat ist.

7. Urethanacrylat, erhältlich durch Umsetzung von
a) α,ω-Polymethacrylatdiolen, deren Mischungen oder Mischungen aus Polyolen mit α,ω-Polymethacrylatdiolen,
b') einem oder mehreren Isocyanat-funktionellen Acrylaten oder Methacrylaten in Gegenwart von
d) Inhibitoren und gegebenenfalls
e) Isocyanatgruppen-reaktiven Verbindungen.

8. Urethanacrylat nach Anspruch 7, **dadurch gekennzeichnet, dass** das Stoffmengen-Verhältnis von α,ω-Polymethacrylatdiol zu isocyanatfunktionellem (Meth)Acrylat 1 : 1 beträgt.

9. Urethanacrylat nach einem der Ansprüche 1 bis 8, **dadurch gekennzeichnet, dass** die Polyole für Polyesterpolyole, Polyetherpolyole, Polycarbonatdiole oder monomere Polyole stehen.

10. Verfahren zur Herstellung von Urethanacrylaten, **dadurch gekennzeichnet, dass** man
a) α,ω-Polymethacrylatdiole, deren Mischungen oder Mischungen aus Polyolen mit α,ω-Polymethacrylatdiolen mit
b) einem oder mehreren Polyisocyanaten mit jeweils wenigstens zwei Isocyanatgruppen
c) einem oder mehreren Hydroxyalkylacrylaten oder Hydroxyalkylmethacrylaten in Gegenwart von
d) Inhibitoren und gegebenenfalls
e) Isocyanatgruppen-reaktiven Verbindungen
umsetzt.

11. Verfahren zur Herstellung von Urethanacrylaten, **dadurch gekennzeichnet, dass** man
a) α,ω-Polymethacrylatdiole, deren Mischungen oder Mischungen aus Polyolen mit α,ω-Polymethacrylatdiolen mit
b') einem oder mehreren Isocyanat-funktionellen Acrylaten oder Methacrylaten in Gegenwart von
d) Inhibitoren und gegebenenfalls
e) Isocyanatgruppen-reaktiven Verbindungen
umsetzt.

12. Verfahren nach Anspruch 10 oder 11, **dadurch gekennzeichnet, dass** man das erhaltene Urethanacrylat mit einem oder mehreren handelsüblichen Emulgatoren in Wasser emulgiert.

13. Verwendung eines Urethanacrylats nach einem der Ansprüche 1 bis 12 zur Beschichtung von Substraten.

14. Verwendung nach Anspruch 13, **gekennzeichnet durch** wenigstens einen Zusatzstoff aus der Gruppe der Monomere, ausgewählt aus mono- und multifunktionellen Acrylaten, Photoinitiatoren oder -sensibilisatoren, Oligomeren, Füllstoffen, Mattierungsmitteln, Verdickungsmitteln, Reaktivverdünnern, Pigmenten, Lösemitteln, Lichtschutzmitteln oder Additiven einsetzt.

## Claims

1. Urethane acrylates obtainable by reacting
a) α,ω-polymethacrylatediols, mixtures thereof or mixtures of polyols with α,ω-polymethacrylatediols with
b) one or more polyisocyanates containing in each case at least two isocyanate groups and
c) one or more hydroxyalkyl acrylates or hydroxyalkyl methacrylates in the presence of
d) inhibitors and, if desired,
e) isocyanate-reactive compounds.

2. Urethane acrylate according to Claim 1, **characterized in that** the polyisocyanate is a diisocyanate.

3. Urethane acrylate according to Claim 2, **characterized in that** the molar ratio of α,ω-polymethacrylatediol to diisocyanate to hydroxyalkyl acrylate is 1 : 2 : 2.

4. Urethane acrylate according to Claim 1, **characterized in that** the polyisocyanate is a triisocyanate.

5. Urethane acrylate according to Claim 4, **characterized in that** the molar ratio of α,ω-polymethacrylatediol to triisocyanate to hydroxyalkyl acrylate is 1 : 2 : 4.

6. Urethane acrylate according to one of Claims 1 to 5, **characterized in that** the hydroxyalkyl acrylate is a hydroxy-functional triacrylate.

7. Urethane acrylate, obtainable by reacting
a) α,ω-polymethacrylatediols, mixtures thereof or mixtures of polyols with α,ω-polymethacrylatediols with
b') one or more isocyanate-functional acrylates or methacrylates in the presence of
d) inhibitors and, if desired,
e) isocyanate-reactive compounds.

8. Urethane acrylate according to Claim 7, **characterized in that** the molar ratio of α,ω-polymethacrylatediol to isocyanate-functional (meth)-acrylate is 1 : 1.

9. Urethane acrylate according to one of Claims 1 to 8, **characterized in that** the polyols are polyesterpolyols, polyetherpolyols, polycarbonatediols or monomeric polyols.

10. Process for preparing urethane acrylates, **characterized in that** it comprises reacting
a) α,ω-polymethacrylatediols, mixtures thereof or mixtures of polyols with α,ω-polymethacrylatediols with
b) one or more polyisocyanates containing in each case at least two isocyanate groups and
c) one or more hydroxyalkyl acrylates or hydroxyalkyl methacrylates in the presence of
d) inhibitors and, if desired,
e) isocyanate-reactive compounds.

11. Process for preparing urethane acrylates, **characterized in that** it comprises reacting
a) α,ω-polymethacrylatediols, mixtures thereof or mixtures of polyols with α,ω-polymethacrylatediols with
b') one or more isocyanate-functional acrylates or methacrylates in the presence of
d) inhibitors and, if desired,
e) isocyanate-reactive compounds.

12. Process according to Claim 10 or 11, **characterized in that** the resulting urethane acrylate is emulsified in water using one or more commercially customary emulsifiers.

13. Use of a urethane acrylate according to one of Claims 1 to 12 to coat substrates.

14. Use according to Claim 13, **characterized in that** at least one additive is used from the group of monomers selected from monofunctional and polyfunctional acrylates, photoinitiators or photosensitizers, oligomers, fillers, flatting agents, thickeners, reactive diluents, pigments, solvents, light stabilizers or additives.

## Revendications

1. Acrylates d'uréthane, pouvant être obtenus par transformation de
a) α,ω-polyméthacrylatediols, leurs mélanges ou des mélanges de polyols avec des α,ω-polyméthacrylatediols avec
b) un ou plusieurs polyisocyanates comprenant à chaque fois au moins deux groupements isocyanate,
c) un ou plusieurs acrylates d'hydroxyalkyle ou méthacrylates d'hydroxyalkyle en présence
d) d'inhibiteurs et le cas échéant,
e) de composés réactifs avec des groupements isocyanate.

2. Acrylate d'uréthane selon la revendication 1, **caractérisé en ce que** le polyisocyanate est un diisocyanate.

3. Acrylate d'uréthane selon la revendication 2, **caractérisé en ce que** le rapport de quantités massiques α,ω-polyméthacrylatediol à diisocyanate à acrylate d'hydroxyalkyle est de 1:2:2.

4. Acrylate d'uréthane selon la revendication 1, **caractérisé en ce que** le polyisocyanate est un triisocyanate.

5. Acrylate d'uréthane selon la revendication 4, **caractérisé en ce que** le rapport de quantités massiques α,ω-polyméthacrylatediol à triisocyanate à acrylate d'hydroxyalkyle est de 1:2:4.

6. Acrylate d'uréthane selon l'une quelconque des revendications 1 à 5, **caractérisé en ce que** l'acrylate d'hydroxyalkyle est un triacrylate à fonctionnalité hydroxy.

7. Acrylate d'uréthane, pouvant être obtenu par transformation de
a) α,ω-polyméthacrylatediols, leurs mélanges ou de mélanges de polyols avec des α,ω-polyméthacrylatediols avec
b') un ou plusieurs acrylates ou méthacrylates à fonctionnalité isocyanate en présence
d) d'inhibiteurs et le cas échéant,
e) de composés réactifs avec des groupements isocyanate.

8. Acrylate d'uréthane selon la revendication 7, **caractérisé en ce que** le rapport de quantités massiques α,ω-polyméthacrylatediol à (méth)acrylate à fonctionnalité isocyanate est de 1:1.

9. Acrylate d'uréthane selon l'une quelconque des revendications 1 à 8, **caractérisé en ce que** les polyols représentent des polyesterpolyols, des polyétherpolyols, des polycarbonatediols ou des polyols monomères.

10. Procédé pour la préparation d'acrylates d'uréthane, **caractérisé en ce qu'**on fait réagir
a) des α,ω-polyméthacrylatediols, leurs mélanges ou des mélanges de polyols avec des α,ω-polyméthacrylatediols avec
b) un ou plusieurs polyisocyanates comprenant à chaque fois au moins deux groupements isocyanate,
c) un ou plusieurs acrylates d'hydroxyalkyle ou méthacrylates d'hydroxyalkyle en présence
d) d'inhibiteurs et le cas échéant,
e) de composés réactifs avec des groupements isocyanate.

11. Procédé pour la préparation d'acrylates d'uréthane, **caractérisé en ce qu'**on fait réagir
a) des α,ω-polyméthacrylatediols, leurs mélanges ou des mélanges de polyols avec des α,ω-polyméthacrylatediols avec
b') un ou plusieurs acrylates ou méthacrylates à fonctionnalité isocyanate en présence
d) d'inhibiteurs et le cas échéant,
e) de composés réactifs avec des groupements isocyanate.

12. Procédé selon les revendications 10 ou 11, **caractérisé en ce qu'**on émulsionne dans de l'eau l'acrylate d'uréthane obtenu avec un ou plusieurs émulsifiants usuels du commerce.

13. Utilisation d'un acrylate d'uréthane selon l'une quelconque des revendications 1 à 12 pour le revêtement de substrats.

14. Utilisation selon la revendication 13, **caractérisée par** au moins un adjuvant du groupe des monomères, choisis parmi des acrylates monofonctionnels et multifonctionnels, des photo-initiateurs ou des photo-sensibilisateurs, des oligomères, des charges, des agents de matage, des épaississants, des diluants de réactifs, des pigments, des solvants, des agents de protection contre la lumière et des additifs.
